# Europäisches Patentamt

**European Patent Office**

**Office européen des brevets**

(19)

(11) Veröffentlichungsnummer: **0 205 479**

**B1**

(12)

# EUROPÄISCHE PATENTSCHRIFT

(45) Veröffentlichungstag der Patentschrift:
02.08.89

(51) Int. Cl.⁴: **G 01 C 7/06, G 01 B 11/24**

(21) Anmeldenummer: **85906024.6**

(22) Anmeldetag: **28.11.85**

(86) Internationale Anmeldenummer:
**PCT/AT 85/00051**

(87) Internationale Veröffentlichungsnummer:
**WO 86/03288 (05.06.86 Gazette 86/12)**

(54) **VERFAHREN ZUR ERFASSUNG VON KURVEN- UND GERADENVERSCHNITTEN MIT HOHLRAUMFLÄCHEN.**

(30) Priorität: **30.11.84 AT 3813/84**

(43) Veröffentlichungstag der Anmeldung:
**30.12.86 Patentblatt 86/52**

(45) Bekanntmachung des Hinweises auf die Patenterteilung:
**02.08.89 Patentblatt 89/31**

(84) Benannte Vertragsstaaten:
**BE CH DE FR GB IT LI NL SE**

(56) Entgegenhaltungen:
**FR-A-2 393 270**

(73) Patentinhaber: **Stolitzka, Gerhard, Ferrogase 47, 1180 Wien (AT)**

(72) Erfinder: **Stolitzka, Gerhard, Ferrogase 47, 1180 Wien (AT)**

(74) Vertreter: **Puchberger, Rolf, Dipl. Ing., Patentanwälte Dipl. Ing. Rolf Puchberger Dipl. Ing. Georg Puchberger Singerstrasse 13, A-1010 Wien (AT)**

EP 0 205 479 B1

## Beschreibung

Die Erfindung betrifft ein Verfahren zur Erfassung von Kurven- und Geradenverschnitten mit Hohlraumflächen, insbesondere im Untertagebau und Bergbau mit Hilfe des Radar-Distanzmessungs-Prinzips.

Bei vielen Vorhaben im Untertagebau und Bergbau ist die rasche koordinative Erfassung und Absteckung von Hohlraumpunkten äußerst wichtig. Dies gilt insbesondere für die in den letzten Jahren sich immer mehr durchsetzende "Neue Österreichische Tunnelbauweise" nach dem Spritzbetonverfahren. Hier ergeben sich wesentliche technische Schwierigkeiten und wirtschaftliche Nachteile, unter anderem beim Vortrieb, aus vermessungstechnischen Gründen. So war es bisher nicht möglich, eine exakte Methode zur Angabe der Ausbruchslinie in angemessener Zeit mit vertretbarem Aufwand zu schaffen, u.a. weil es auch nicht möglich war, vor Ort und unmittelbar nach dem Abschlag, d.h. noch im Rohausbruch, eine Kontrolle hinsichtlich Über- und Unterprofilen durchzuführen. Die bisher verwendeten Kontrollmeßverfahren, einschließlich ihrer Auswertung, sind umständlich, zeitaufwendig und nur mit so großen Vortriebsbehinderungen möglich, daß der angestrebte Wirtschaftlichkeitseffekt wieder aufgehoben wird.

Es ist bereits bekannt, mittels berührungslosem Laserentfernungsmeßgerät gekoppelt an ein schienengebundenes Meßfahrzeug und damit an das relative Bezugssystem einer Gleisachse, kontinuierlich den Längs- oder Querprofilverlauf eines Tunnels zu erfassen. Die Meßeinrichtungen mit den verschiedenen Aufnahmeverfahren sind an das relative Bezugssystem der Gleisachse gebunden und nicht in der Lage, in beliebigen Hohlräumen. z. B. den Verschnitt einer in einem frei wählbaren übergeordneten Bezugssystem definierten Raumkurve mit der Hohlrauminnenfläche automatisch anzusteuern und koordinativ zu erfassen. Bei einer weiteren Vorrichtung zur Vermessung von Querschnittsprofilen in Hohlraumbauten wird das System automatisch angesteuert, vermag aber nur in einer lotrechten Ebene mit konstanten Winkelschritten Profilpunkte einzumessen und diese gegen ein Vollprofil zu vergleichen. Das Aufsuchen des Verschnittpunktes von analytisch definierten Raumkurven mit einer beliebigen Hohlraumfläche ist mit dieser Vorrichtung nicht möglich. In diesem Zusammenhang sei auf die FR-PS-2 393 270 verwiesen.

Erfindungsgemäß wird jetzt vorgeschlagen, daß ein theodolitartig aufgebautes Meßgerät, dessen axiale Zieleinrichtung ein Laser-Radar-Distanzmesser ist, an einem beliebigen Punkt im Hohlraum aufgestellt wird, daß dem Sollzustand des Hohlraumes eine Sollrasterfläche zugeordnet wird, die in einem zugeordneten Rechner gespeichert ist, daß in ausgewählten Rasterknotenpunkten der Sollrasterfläche eine beliebig zugeordnete Raumkurve, beispielsweise je eine Gerade, die einen Normalenvektor der Sollrasterfläche bildet, angenommen wird, eine Regelfläche durch ein Meßgerätezentrum und die jeweilige zugeordnete Raumkurve bzw. Gerade gelegt wird und die Zielachse des Meßgerätes räumlich mittels einer Steuerung in der aufgespannten Regelfläche bewegt wird, wobei beim Zusammenfallen des Zielpunktes auf der tatsächlichen Hohlraumkontur mit dem Spurpunkt der Raumkurve bzw. Geraden die durch die Zielachse orientierte Raumrichtung aufgezeichnet wird, worauf dann die Raumkoordinaten des Zielpunktes bestimmt und mit den Sollkoordinaten des zugehörigen Rasterknotenpunktes verglichen werden.

Mit Hilfe des erfindungsgemäßen Verfahrens lassen sich allgemeine Bestandsaufnahmen, Aufnahmen von Hohlräumen oder Einzelprofilen mit lokalem Bezugssystem sowie im Tunnel- oder Landeskoordinatensystem vornehmen, Über- und Unterschnitte gegen Regelkonturen von Hohlräumen erfassen, die Nachbearbeitung von Unterprofilen ausschalten, Massenermittlungen durchführen, punktweise Geraden- und Flächenschnitte mit dem Gebirge (z. B. Bohrlochpunkte) abstecken und Deformationsmessungen durchführen.

Zum besseren Verständnis wird das Verfahren der Erfindung in einer Zeichnung dargestellt.

Im Hohlraum 14 ist ein Meßgerät 15 vorgesehen, das ein Meßgerätezentrum 4 aufweist. Dieses Meßgerät ist theodolitartig aufgebaut und seine Zielachse enthält einen koaxial angeordneten Laser-Radar-Entfernungsmesser mit integriertem Laserleitstrahl. Zur azimulaten Orientierung dient ein achsparallel montiertes Zielfernrohr. Die Zielachse ist hier mit 9 bezeichnet. Das Gerät ist durch Winkelgeber um eine lotrechte Drehachse 10 und eine horizontale Drehachse 11 bewegbar, wobei die Drehung durch genau ansteuerbare Schrittmotoren erfolgt. Angeschlossen an das Meßgerät 15 ist ein Steuerrechner 12 mit Auswerteeinheit.

Dem Hohlraum 14 ist eine Sollrasterfläche 13 zugeordnet und in ausgewählten Rasterknotenpunkten 5 z. B. jeweils der Normalenvektor 1 gebildet. Im Abstand zur Sollrasterfläche liegt nun die tatsächliche Hohlraumkontur 3 und die Normalenvektoren bilden auf der Hohlraumkontur 3 "radial idente" Rasterknoten 6. Mit Hilfe der Zielstrahlen 8 vom Meßgerät 15 wird eine Regelfläche 7 gebildet und die Zielachse 9 des Meßgerätes 15 wird solange in der Regelfläche 7 verschoben, bis die Identität des Zielpunktes mit dem Normalenvektor 1 erreicht wird. In diesem Zustand wird die Raumrichtung aufgezeichnet, die Raumkoordinaten des Zielpunktes errechnet und mit den Sollkoordinaten des zugehörigen Rasterknotenpunktes verglichen.

Auf diese Weise ist es möglich den Hohlraum innerhalb kürzester Zeit punktweise zu vermessen ohne daß eine Störung der im Hohlraum vorgenommenen Arbeiten erfolgen muß. Die Distanzmessung arbeitet nach dem Laser-Radar-Prinzip und es läßt sich eine Genauigkeit von ± 1 cm im Nachbereich, d.h. also bis in einige Zehnermeter Entfernung, in Abhängigkeit von der Distanz und dem Reflexionsvermögen des angezielten Objektes erreichen. Es ist eine automatische, punktweise Erfassung beliebiger Regelflächen- oder Raumebenenschnitte durch das Meßgerätezentrum oder ganzer Hohlraumabschnitte mit frei wählbarer Punktdichte möglich, man kann exakte Spurpunktabsteckungen von Geraden-, Kurven- und Flächenverschnitten mit dem Gebirge, so z. B. vorgerechnete Bohrlochschablonen, Ausbruchsbegrenzungen, Einbauangaben für Stützbögen und dgl. durchführen. In einem Arbeitsgang werden in Hohlräumen oder Tunnels - auch in gefährdeten, unzugänglichen Bereichen - Profile erfaßt, bezüglich Unter- oder Überschnitten gegen Sollwerte verglichen und für beliebige Stationierungen im Tunnelkoordinatensystem angegeben. Aus den gewonnenen Messungen läßt sich dann eine Vielzahl von Erkenntnissen für den Bauablauf gewinnen, z. B. Massenbilanzen und dgl.. Mit Hilfe der Erfindung ist es auch möglich, laufend Rückschlüsse über verschiedene technologische Eigenschaften des Gebirges und des Ausbaues zu erhalten. Möglich sind z. B.:

- eine Minimierung des geologisch bedingten Überprofiles,
- eine Optimierung des notwendigen Übermaßes wegen der zu erwartenden Deformationen während des Vortriebes gegebenenfalls durch Ermittlung der Verformungsveränderungsgeschwindigkeit,
- wie vor, die rasche Anpassung einer Stützbogenausteilung,
- die Feststellung "absoluter" vorzeichenbestimmter Verformungsgrößen in den Ulmenbereichen (gegenüber relativen Konvergenzen und Divergenzen),
- ein frühzeitiges Erkennen von partiellen Stabilitätsproblemen aufgrund außerordentlicher, geologischer Umstände (regionaler Kollapsvorgänge) als Entscheidungshilfe für Sicherheitsvorkehrugen und
- eine unmittelbare und genaue Erfassung des Ausmaßes und der Kubatur von vermeidbaren, über das Regelausbruchprofil hinausgehenden Überprofilen.

Weiters kann sofort nach dem Abschlag:
- jedes Unterprofil erkannt und noch vor den Stützungsmaßnahmen nachgearbeitet werden,
- in kürzester Zeit, punktweise und cm-genau die Sollausbruchsgrenze markiert und
- exakte Montageangaben für den Stützbogeneinbau angegeben werden.

Unabhängig davon erlaubt das Meßsystem auch alle Arten von Hohlraumbestandaufnahmen, z. B. für die Bauabnahme (bei glatten Betonflächen auf wenige mm genau).

In der Möglichkeit, von verschiedenen koordinativ bekannten Standpunkten aus, nicht nur jeweils ein oder auch mehrere in ihrem Ablauf fest vorgegebene und auf den Standpunkt bzw. eine Standlinie bezogene Messungen abzuwickeln, sondern - nur als Beispiel gewählt - den Verschnitt einer analytisch definierten Kurve mit einer beliebig strukturierten Fläche präzise aufzunehmen und einzumessen, liegt der Unterschied der vorliegenden Erfindung zu allen bisher bekannten Verfahren von Hohlraumflächenerfassungen.

Beim erfindungsgemäßen Verfahren wird die Zielachse eines theodolitartig aufgebauten Meßgerätes über einen elektronischen Steuerrechner und mit Hilfe von Schrittmotoren entlang der Bahn einer im Standpunktsystem ( z. B. Landeskoordinatensystem) analytisch definierten, beliebigen Raumkurve geführt und kontinuierlich während dieses Prozesses durch einen koaxial zur Zielachse messenden Laser-Radardistanzmesser ohne Reflektor die Entfernung zur Hohlraumfläche erfaßt, diese laufend mit dem Abstand zur verfolgten Raumkurve verglichen und beim Zusammenfallen beider Längen der damit gefundene Verschittpunkt von Raumkurve und Hohlraumfläche koordinativ eingemessen. Kennzeichnet die Raumkurve z. B. den Verlauf einer Gebirgsbewegung (Deformation), so kann zu einem späteren Zeitpunkt von einem beliebigen anderen, im Landeskoordinatensystem definierten Standpunkt aus, der idente Zielpunkt aus einer vorangehenden Messung mit dem beschriebenen Meßgerätsystem prazise wieder aufgesucht, eingemessen und die Größe der eingetretenen Deformation aus dem gespeicherten früheren Meßwert ermittelt werden.

Im praktischen Fall wird die radiale Veränderung von Hohlraumflächenpunkten in Zuordnung zu einem fixen, räumlichen Bezugsraster in bestimmten Zeitabständen gesucht, womit die Definition der Raumkurve auf die Normalenvektoren in den Knoten eines Bezugsgitters reduziert wird.

Dieses Verfahren - in Zusammenhang mit dem beschriebenen Meßsystemist die einzige Methode, die in kürzester Zeit vor Ort die besprochenen Ergebnisse liefert. Speziell für sicherheitstechnische Entscheidungen (z. B. in kritis chen Bauphasen bei Anwendung der neuen österr. Tunnelbaumethode) ist die Aktualität der Meßergebnis se unverzichtbar, da darauf bezogene Sicherungsmaßnahmen sofort und unwiderruflich eingebaut werden.

Ein solches Gerätesystem ist in der Lage, im Anschluß an hunderte Meter entfernte Festpunkte die eigene Raumlageposition (ohne zusätzliche Außeneinmessungen) zu ermitteln und die geschilderte iterative Aufsuchung "radial identer" Punkte - inklusive deren Bestimmung auf wenige Millimeter genau - für rund 30 Meßpunkte/Minute abzuarbeiten.

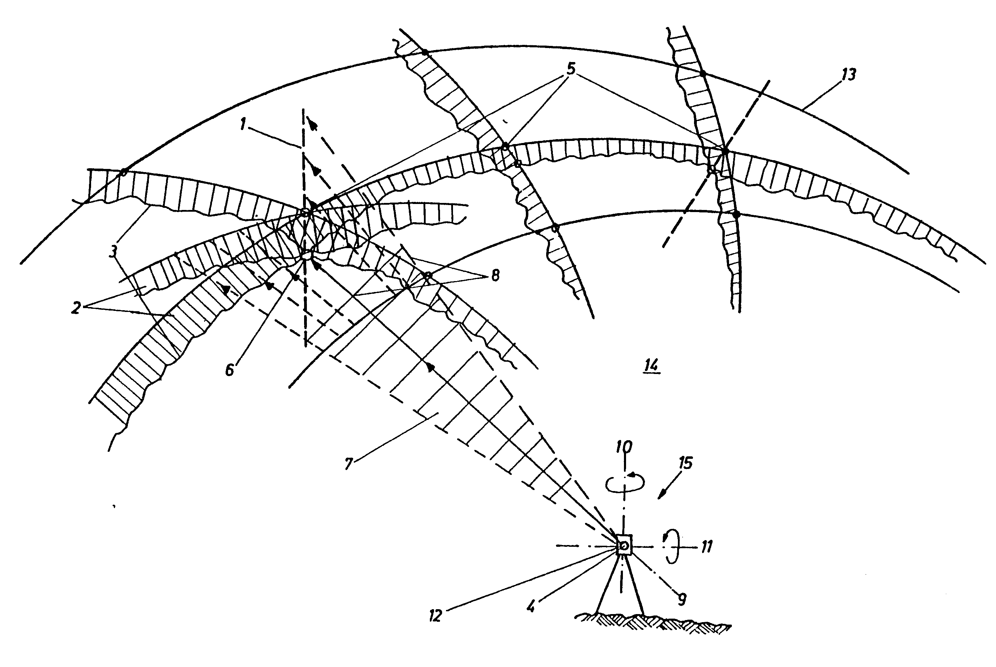

**Patentanspruch**

Verfahren zur Erfassung von Kurven- und Geradenverschnitten mit Hohlraumflächen, insbesondere im Untertagebau und Bergbau, mit Hilfe des Radar-Distanzmessungsprinzips, dadurch gekennzeichnet, daß ein theodolitartig aufgebautes Meßgerät (15), dessen axiale Zieleinrichtung ein Laser-Radar-Distanzmesser ist, an einem beliebigen Punkt im Hohlraum (14) aufgestellt wird, daß dem Sollzustand des Hohlraumes (14) eine Sollrasterfläche (13) zugeordnet wird, die in einem zugeordneten Rechner (12) gespeichert ist, daß in ausgewählten Rasterknotenpunkten (5) der Sollrasterfläche (13) eine beliebig zugeordnete Raumkurve, beispielsweise je eine Gerade (1), die einem Normalenvektor der Sollrasterfläche (13) entspricht, angenommen wird, eine Regelfläche (7) durch ein Meßgerätezentrum (4) und die jeweilige zugeordnete Raumkurve bzw. Gerade (1) gelegt wird und die Zielachse (9) des Meßgerätes (15) räumlich mittels einer Steuerung in der aufgespannten Regelfläche (7) bewegt wird, wobei beim Zusammenfallen des Zielpunktes auf der tatsächlichen Hohlraumkontur (3) mit dem Spurpunkt der Raumkurve bzw. Geraden (1) die durch die Zielachse (9) orientierte Raumrichtung aufgezeichnet wird, worauf dann die Raumkoordinaten des Zielpunktes bestimmt und mit den Sollkoordinaten des zugehörigen Rasterknotenpunktes (5) verglichen werden.

**Claim**

Process for the measurement of curved- and straight-line intersections with cavity surfaces, particularly in underground working and mining, with the aid of the radar distance-measuring principle, characterized in that a theodolite-like measuring instrument (15), the axial aiming apparatus of which is a laser-radar distance-measuring device, is installed at any point in the cavity (14), in that a nominal grid surface (13) is assigned to the nominal state of the cavity (14), said nominal grid surface (13) being stored in a corresponding computer (12), in that a randomly assigned space curve, for example a straight line (1) corresponding to a normal vector of the nominal grid surface (13), is assumed at selected grid nodes (5) of the nominal grid surface (13), a control surface (7) is passed through a measuring-instrument centre (4) and through the respective space curve or straight line (1) and the aiming axis (9) of the measuring instrument (15) is moved spatially by means of a control in the spanned control surface (7), wherein, when the aim point on the actual cavity contour (3) coincides with the trace of the space curve or straight line (1), the spatial direction, oriented by the aiming axis (9), is recorded, whereupon the spatial coordinates of the aim point are then determined and are compared with the nominal coordinates of the corresponding grid node (5).

**Revendication**

Procédé de détermination d'intersections de courbes et droites avec des surfaces d'espaces creux, en particulier dans la construction souterraine et l'exploitation minière, à l'aide du principe de la mesure de distance par radar, caractérisé en ce qu'un appareil de mesure (15) conçu de manière similaire à un théodolite, dont le dispositif de visée axiale est un télémètre à radar et laser, est installé à un point quelconque de l'espace creux (14), en ce qu'à l'état théorique de l'espace creux (14), est associé un maillage théorique (13) qui est mémorisé dans un calculateur connecté (12), en ce que sur des noeuds sélectionnés (5) du maillage théorique (13), on prend pour hypothèse une courbe spatiale quelconque, par exemple une droite (1) correspondant à un vecteur normal du maillage théorique (13), qu'une surface réglée (7) est formée par le centre (4) d'un appareil de mesure et la courbe spatiale ou droite (1) associée et que l'axe de visée (9) de l'appareil de mesure (15) se meut dans l'espace à l'intérieur de la surface réglée étendue, au moyen d'une commande, en sachant que lors de la coïncidence du point de visée sur le contour réel de l'espace creux (3) avec la trace de la courbe spatiale ou de la droite (1), la direction spatiale indiquée par l'axe de visée (9) sera enregistrée, et qu'ensuite les coordonnées spatiales du point de visée seront déterminées et comparées aux coordonnées théoriques du noeud correspondant (5) du maillage.